# EUROPEAN PATENT SPECIFICATION

(11) **EP 2 294 453 B1**
(45) Date of publication and mention of the grant of the patent: **08.07.2015**
(21) Application number: 09763209.5
(22) Date of filing: 21.05.2009
(51) Int. Cl.: G01S 15/02, G01S 5/14

(54) **MEASURING ELECTROMAGNETIC SOURCE GEOMETRY**
MESSUNG DER GEOMETRIE EINER ELEKTROMAGNETISCHEN QUELLE
MESURE DE LA GÉOMÉTRIE D UNE SOURCE ÉLECTROMAGNÉTIQUE

(30) Priority: 25.05.2008 US 126894
(43) Date of publication of application: 16.03.2011
(73) Proprietor: Geco Technology B.V., 2586 BJ S'Gravenhage (NL)
(72) Inventor: VIGEN, Erik, N-3512 Honefoss (NO); GOUJON, Nicolas, N-0478 Oslo (NO)
(74) Representative: Suckling, Andrew Michael
(86) International application number: PCT/US2009/044888
(87) International publication number: WO 2009/151918

(56) References cited:
- WO-A2-2008/008127
- WO-A2-2008/044042
- GB-A- 2 173 900
- KR-A- 20040 069 648
- US-A1- 2006 178 829
- US-A1- 2007 025 185
- US-A1- 2007 061 078
- US-A1- 2008 008 032
- US-B2- 7 191 063

## Description

### BACKGROUND OF INVENTION

Electromagnetic (EM) prospecting techniques are commonly used in mineral and hydrocarbon exploration. Passive EM technologies, such as marine Magneto-Tellurics (MT), work by measuring the naturally occurring EM fields in the earth. Active EM techniques, on the other hand, may use a controlled EM (CSEM) energy source (e.g., an antenna) instead of recording earth's passive energy. In EM surveys, receivers measure the distortion of the source field by locally present resistors-such as those associated with the presence of hydrocarbon deposits. These measurements can then be related back to the conductivity and resistivity, and thus, the porosity and types of fluids in the rock. Therefore, these EM measurements allow the user to identify hydrocarbon deposits.

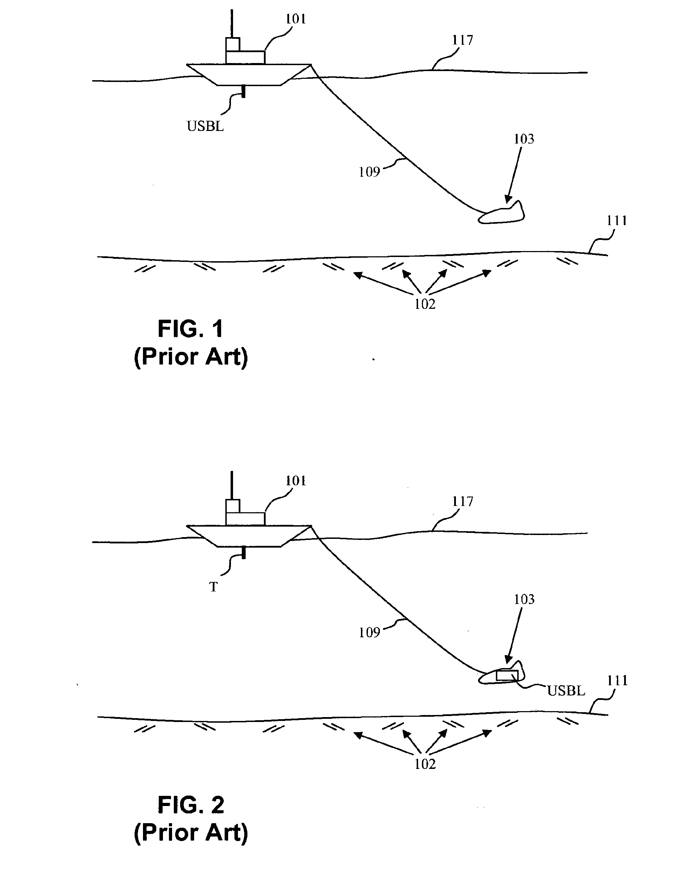

FIG. 1 illustrate an example of a CSEM survey in a marine environment. As shown, a surface vessel **101** on the sea surface **117** tows a towfish **103.** The towfish **103** includes an EM source that is electrically connected to the surface vessel **101** via cables that run along the tow line **109.** The EM source emits low frequency EM fields that propagate outward through sea water and into the seafloor **111.** In a typical operation, the towfish **103** is drag by the surface vessel **101** such that the EM source will be at a relatively constant distance (typically 40-50 m) from the seafloor **111.** A plurality of receivers **102** are disposed on seafloor **111** for detecting the signals returned from the EM fields that have traversed the subsea formation.

Due to the variable and lower conductivities in the sub-sea formations, the propagation of EM fields through the subsea formations will be substantially affected. On the other hand, the conductivity of the sea water is substantially constant. Therefore, any changes or variations of the detected EM signals will reflect conductivity variations in the subsea formations. Therefore, the measured EM signals may be used to derive the subsea formation electrical properties (i.e., resistivity or conductivity).

For accurate mapping of the subsea formation resistivities, the positions of the towfish (EM source) **103** and the receivers **102** will need to be accurately determined. The locations of the receivers **102** and/or the towfish **103** are typically determined using an acoustic ranging system. An acoustic ranging system typically uses one or more USBL (Ultra-short baseline) device to measure the distance (range) between the objects. A typical marine USBL system consists of a transceiver (USBL) that is mounted on a pole under a ship and a transponder/responder (not shown) on the object to be ranged, e.g., the receivers **102** on the seafloor, the towfish **103,** or a remote operated vehicle (ROV).

In a ranging operation, an acoustic pulse is transmitted by the transceiver and detected by the transponder, which then replies with its own acoustic pulse. This return pulse is detected by the transceiver. The time from the transmission of the initial acoustic pulse until the reply is detected by the transceiver is measured by the USBL system. In addition, the transceiver normally contains three or more transducers separated by a baseline of 10cm or less. The "spaced" transducer array will typically not receive the reply signal simultaneously, hence the received signals would have phase differences. A "phase-differencing" method can then be used, based on the phase differences of the signals received by the different transducers in the array, to calculate the angle from the transducer array to the transponder on the object being determined. Thus, the USBL system can determine the location of a transponder based on its range (distance) and bearing measured by the transceiver (the transducer array).

In deep water ranging, the towfish and the receivers are at long distances from the USBL transceiver, making it difficult to get good signals for accurate measurements. In the conventional configuration shown in FIG. 1, the USBL transceiver is located near the water-air interface, acoustic noises generated by this interface may interfere with or reduce the sensitivity of the measurements. To alleviate the interference or S/N problems, an inverted configuration USBL system has been proposed. See e.g., http://sonardyne.co.uk/News/baseline/baseline magazine issue 1.pdf

As shown in FIG. 2, in an inverted USBL system, the USBL transceiver is located on the remote object (e.g., the towfish **103**), and a transponder **T** is located below the surface vessel **101.** By placing the transceiver (USBL) away from the air-water interface, the signal-to-noise ratio is improved with this configuration.

These prior art methods are capable of determining the positions of the towfish and receivers. However, during a survey, the EM source is dragged by the surface vessel. The electrodes on the EM sources may not maintain the same configuration or orientation at all times. Therefore, there is a need for systems and methods that can be used to monitor the geometry of the EM source during the survey in order to improve the performance of CSEM prospecting.

WO 2008/008217 proposes a method of maintaining orientation of a horizontal electric dipole source for underwater deployment. The electric dipole source has two electrodes, and position location sensors are placed near each electrode. Means are provided for correcting the electrodes to be at the same elevation with azimuth aligned with the source tow line and the electrode mid-point positioned over the source tow line based on instantaneous information from the sensors.

### SUMMARY OF INVENTION

One aspect of the invention relates to electromagnetic sources for electromagnetic survey of a subsea formation. An electromagnetic source in accordance with one embodiment of the invention includes: a towfish configured to be towed by a surface vessel; a plurality of electrodes attached to the towfish, wherein the plurality of electrodes are configured to generate at least one electromagnetic field; and an acoustic ranging system having acoustic components individually attached to corresponding ones of the towfish and the plurality of electrodes, wherein the acoustic ranging system is configured to determine a geometry of the plurality of electrodes, wherein the acoustic component attached to the towfish is a transceiver, and the acoustic components attached to respective ones of the plurality of electrodes are transponders, wherein the transceiver is configured to transmit pulses to the transponders and to a transponder at the surface vessel, and the transceiver is configured to receive reply signals, responsive to the pulses, from the transponders attached to the electrodes and the transponder at the surface vessel.

Another aspect of the invention relates to systems for electromagnetic survey of a subsea formation. A system in accordance with one embodiment of the invention includes a plurality of electromagnetic receivers for positioning on a seafloor; and an electromagnetic source of the first aspect.

Another aspect of the invention relates to methods for electromagnetic survey of a subsea formation. A method in accordance with one embodiment of the invention includes deploying a plurality of electromagnetic receivers on a seafloor; transmitting an electromagnetic field into the subsea formation using an electromagnetic source towed by a surface vessel at a selected distance above the seafloor, wherein the electromagnetic source comprises: a towfish configured to be towed by the surface vessel; a plurality of electrodes attached to the towfish; and an acoustic ranging system having acoustic components individually attached to corresponding ones of the towfish and the plurality of electrodes, wherein the acoustic component attached to the towfish is a transceiver, and the acoustic components attached to respective ones of the plurality of electrodes are transponders, wherein the transceiver is configured to transmit pulses to the transponders and to a transponder at the surface vessel, and the transceiver is configured to receive reply signals, responsive to the pulses, from the transponders attached to the electrodes and the transponder at the surface vessel; detecting electromagnetic signals returned from the subsea formation; and determining a geometry of the plurality of electrodes of the electromagnetic source.

Other aspects and advantages of the invention will be apparent from the following description and the appended claims.

### BRIEF DESCRIPTION OF DRAWINGS

FIG. 1 shows a conventional CSEM survey system having a surface vessel towing an EM source at a selected distance from a sea floor, where a plurality of receivers are deployed. The surface vessel includes an acoustic ranging system (USBL) for determining the locations of the towfish and the receivers.
FIG. 2 shows another CSEM survey system having a surface vessel towing an EM source at a selected distance from a sea floor, where a plurality of receivers arc deployed. The towfish includes an acoustic ranging system (USBL) for determining the locations of the towfish with respect to the surface vessel.
FIG. 3A shows a conventional towfish having two electrodes in tow for generating electromagnetic (EM) fields into the subsea formation.
FIG. 3B shows a variation of a conventional towfish having four electrodes in tow for generating cross dipole EM fields into the subsea formation.
FIG. 4A shows an EM source in accordance with one embodiment of the invention. The EM source includes an acoustic ranging system for determining the geometry of the electrodes in the EM source.
FIG. 4B and 4C show EM sources in accordance with other embodiments of the invention. The EM source includes an acoustic ranging system for determining the geometry of the electrodes in the EM source.
FIG. 5 shows a system for marine EM survey in accordance with one embodiment of the invention.
FIG. 6 shows a flow chart illustrating a method in accordance with one embodiment of the invention.
FIG. 7 shows a block diagram illustrating a system for CSEM survey in accordance with one embodiment of the invention.

### DETAILED DESCRIPTION

Embodiments of the invention relate to methods and systems for measuring the location, orientation, and geometry of an EM source, which may be used in CSEM (controlled source electromagnetic) prospecting. Embodiments of the invention use acoustic ranging systems to determine the geometry, orientation, and/or locations of the electrodes of an EM source. The acoustic ranging system includes various acoustic components attached to the EM source. Being able to determine these parameters with accuracy makes it possible to have more reliable subsea resistivity surveys.

An acoustic ranging system comprises various acoustic components, which are transducers that can receive and transmit acoustic signals. These acoustic components may comprise similar or identical devices, but may be used for different roles (functions) in the system. In this description, different terms may be used to describe these components based on their functions. However, one of ordinary skill in the art would appreciate that these may be physically identical or similar units, even though they are used to play different roles. For example, the term "transceiver" would be used to denote the component that generates an acoustic pulse to a "transponder" and receives the reply signal from the transponder, whereas the term "transponder" is used to describe the acoustic component that receive the pulse from the transceiver and responds with a reply signal.

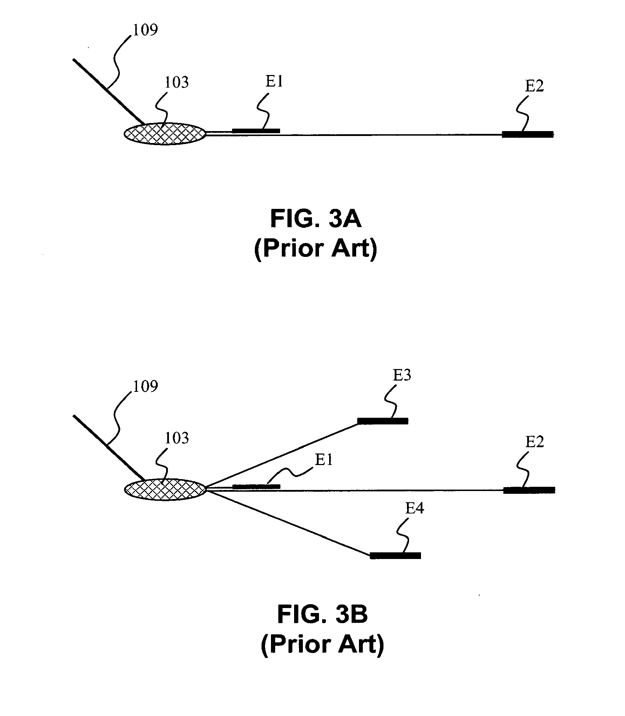

Various EM sources are known in the art. For example, FIG. 3A shows a conventional CSEM source that includes dipole electrodes E1,E2 dragged behind the towfish **103.** These electrodes E1,E2 are often deployed in line with the travel direction of the towfish **103.** The electromagnetic field they generate will have a dipole in line with the towfish travel direction. Alternatively, the two electrodes E1,E2 may be deployed in other configurations to generate electric dipoles in different orientations.

In addition to the traditional two-electrode system, a CSEM source may also include more than two electrodes. For example, U.S. Patent Application Publication No. 2007/0145980, by Conti et al. and assigned to the assignee of the present invention, discloses multi-component field sources for subsea exploration. One example is shown in FIG. 3B, which shows a four-electrode CSEM source that can produce cross dipoles. In this example, the two additional electrodes are arranged in a direction that is substantially diagonal to the first pair of electrodes, E1,E2. The electric dipole generated by E3,E4 would be in a direction that is different from that generated by E1,E2. This EM source would allow one to survey the electrical properties of the subsea formations in two different orientations.

Note that while these CSEM sources are described as having electrodes, one skilled in the art would appreciate that these EM sources may also comprise coils or antennas for generating electromagnetic fields. This description may use EM sources having electrodes to illustrate embodiments of the invention. However, this is for clarity of illustration and is not intended to limit the scope of the invention, i.e., embodiments of the invention may also be used with coil or antenna EM sources. The electrodes referred to in this invention may also refer to coils or other types of antennas that generate electromagnetic fields.

When these CSEM sources are dragged in water during measurements, the geometry, orientation, and relative positions of these electrodes may change with time due to various factors, such as currents, travel speeds, etc. In order to obtain measurement data that can produce accurate estimates of the resistivities of the subsea formations, the geometry, orientation, and relative positions of these electrodes and towfish should be monitored.

In accordance with embodiments of the invention, an EM source for use in CSEM survey may include one or more acoustic ranging system. The acoustic ranging systems included in the EM sources may be used to monitored the geometry, orientation, and relative positions of these electrodes during the survey. Because these acoustic ranging systems are located close to the EM source, they can determine the geometry of the various electrodes with high degree of accuracy.

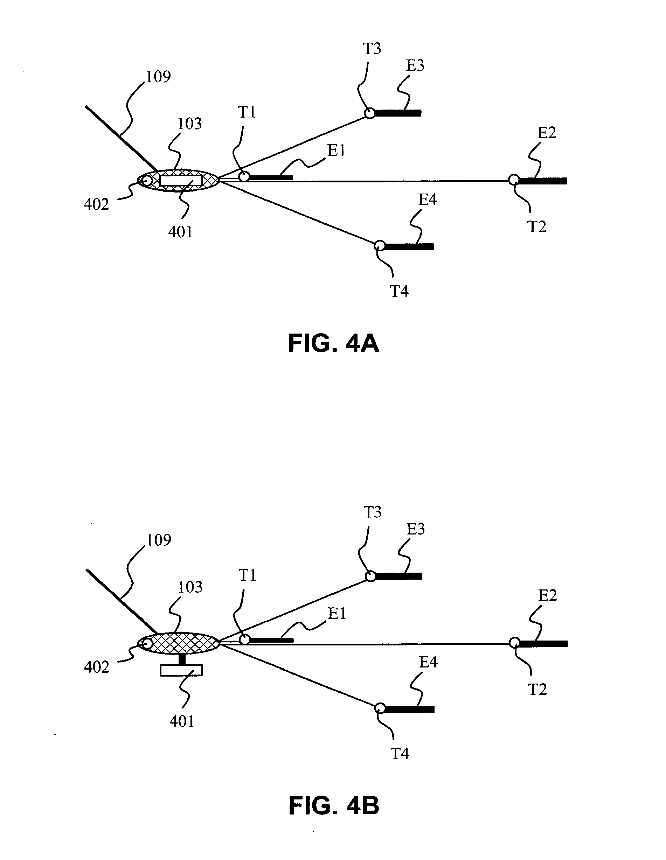

FIG. 4A shows an example of a CSEM source in accordance with one embodiment of the invention. As shown, a transceiver **401** (USBL or a similar transceiver such as SBL) is included on the towfish **103**, while each electrodes E1,E2,E3,E4 is equipped with a transponder T1,T2,T3,T4. The USBL or SBL transceiver **401** sends pulses to the transponders T1,T2,T3,T4 associated with the electrodes. The transponders T1,T2,T3,T4 send reply signals when a pulse from the transceiver **401** is received. The reply signals received by the transceiver **401** may then be used to determine the ranges (distances) and bearings of the individual electrodes E1,E2,E3,E4. Therefore, the geometry, orientation, and relative positions of these electrodes E1,E2,E3,E4 can be monitored and/or recorded during a survey.

Note that while the embodiment in FIG. 4A has the transceiver **401** disposed on the towfish **103**, one of ordinary skill in the art would appreciate that the transceiver **401** can also be placed at some other places, for example attached to the vicinity of the towfish **103**, as shown in FIG. 4B. In the description, the term "attached to" will be used in a general sense to describe the placement of a transceiver on a towfish, whether the transceiver is disposed inside the towfish, on the outside of the towfish, or in the vicinity of the towfish as shown in FIG. 4B. Similarly, the transponders T1,T2,T3,T4 may be disposed directly on the electrodes E1,E2,E3,E4 or in the vicinity of the electrodes E1,E2,E3,E4, i.e., the transponders may be "attached to" the electrodes.

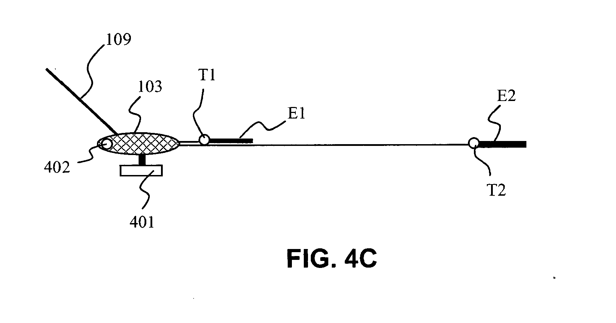

The acoustic ranging systems illustrated in FIG. 4A and FIG 4B are examples for determining the geometry (i.e., relative distances and bearings) between different electrodes and the towfish. Knowing the geometry of the electrodes indirectly gives the relative orientations and distances between the electrodes. One skilled in the art would appreciate that other modifications or variations of the acoustic ranging systems shown in FIG. 4A and FIG. 4B are possible without departing from the scope of the invention. For example, one may equip the electrodes with transceivers such that one can also determine the relative distances and bearings among the electrodes. In another example in FIG. 4C, the acoustic ranging system is implemented in a conventional CSEM having two-electrodes E1 and E2. The transceiver **401** is disposed in the vicinity of the towfish **103**, while the transponders T1 and T2 are on the electrodes E1 and E2.

In accordance with embodiments of the invention, the acoustic ranging systems for determining the geometry of the EM source electrodes may use any suitable devices, including USBL (ultra-short baseline), SBL (short baseline), LBL (long baseline) devices, or the like. Depending on the types of the devices, different methods may be used to determine the geometry of the electrodes.

For example, in a system having a USBL device disposed on or near a towfish and transponders disposed on or near the electrodes, a pulse can be sent from the USBL to the transponders, each of which then respond with a reply signal. The times and phases of the reply signals received by the transducer array in the USBL are then used to derive the ranges (distances) and bearings of the transponders relative to the USBL, as described above. While a single USBL is typically sufficient for such applications, one may also use more than one USBL device arranged in a proper configuration to increase the robustness of the system, see for example the following discussion related to SBL devices.

If SBL (instead of USBL) devices are used, one may use more than one SBL devices. The plurality of SBL transceivers (typically 3 or more) may be disposed on or near a towfish in a proper configuration such that the location (distance and bearing) of a transponder can be determined (e.g., by triangulation). If four SBL transceivers are used, they may be arranged in a tetrahedral configuration, for example, such that the location of any transponder can be determined in the 3D space. Of course, even more SBL transceivers may be used to establish a robust ranging system.

If the acoustic devices form a sufficiently robust measurement geometry, it may be possible to determine the shape and size of the EM electrode configurations by measuring some or all ranges (distances) between pairs of the acoustic devices. For example, with four electrodes (see e.g., FIG. 3B), there are six distances among them. Determination of 5 of these 6 distances will be sufficient to fix the geometry of the electrode arrangement.

The determination (or monitoring) of the electrode geometry may be performed in real time during a survey. If any of the electrodes fails to respond at some time points, the missing information may be interpolated or determined using a model.

Once the geometry of the electrodes (i.e., the relative locations of the electrodes) is determined, one may also want to determine the orientation of the EM source (or the towfish). The EM source attached to the towfish **103** is subject to various environmental impacts during a survey, including rotational disturbances such as roll, pitch, and yaw. These rotational disturbances may affect the orientation (attitude) of the towfish (hence, the orientation of the EM sources). An attitude determination system **402** (FIG. 4A or 4B) may be disposed on (or in the vicinity of) the towfish to determine the attitude elements of the reference frame of the acoustic ranging system. The attitude determination system **402** determines the vertical tilt (or orientation) of the towfish with respect to an outside reference (e.g., the gravitational direction).

Any orientation methods or devices known in the art may be used with embodiments of the invention. For example, an inertial platform (or an attitude system and a compass) may be used on the same vehicle that holds the SBL or USBL device. The inertial platform, for example, may be used to establish the orientation of the local coordinate frame of the SBL or USBL system. Alternatively, combinations of gyros and accelerometers may be used., *see e.g.,* U.S. Patent No. 4,038,876 issued to Morris.

The above described processes can provide the orientation and geometry of an EM source. In accordance with embodiments of the invention, the geometry and orientation of a EM source determined by the acoustic system may be temporarily stored in a processor/memory on the towfish for later retrieval or transmitted to a processing system on the surface vessel **101** via a cable along the tow line **109**.

In order to determine the EM source location in the survey frame, the EM source may be positioned (i.e., determination of its range and bearing) relative to the surface vessel. This may be accomplished using a transceiver (e.g., USBL, SBL or the like) attached to the bottom of the surface vessel and a transponder disposed on the towfish, as illustrated in FIG. 1. Alternatively, one may use a transceiver (e.g., USBL, SBL, or the like) on the towfish and a transponder attached to the surface vessel, as illustrated in FIG. 2.

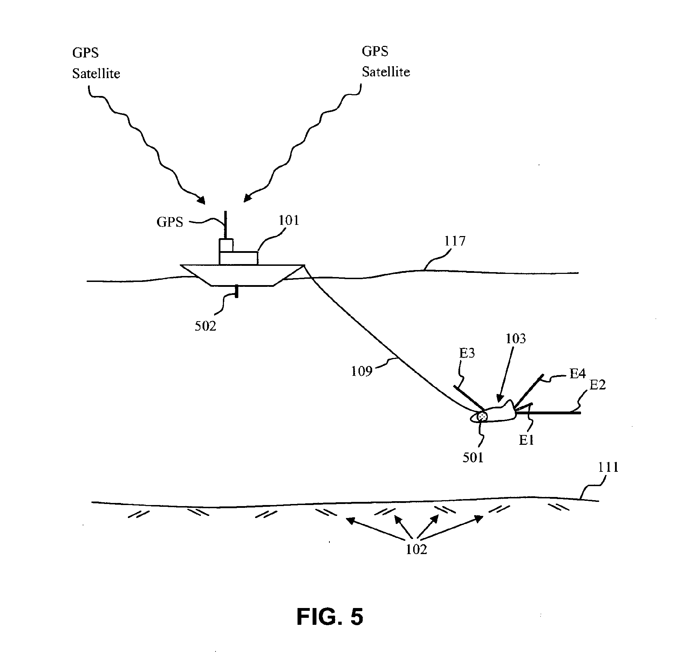

FIG. 5 shows an example of a CSEM survey in accordance with one embodiment of the invention (analogous to that shown in FIG. 1). As shown, a transceiver **502** as part of an acoustic ranging system may be attached to the bottom of the surface vessel **101**. The transceiver **502** may comprise a USBL device, an SBL device, an LBL device, or the like. With this system, the transceiver **502** would send a pulse to the towfish **103**. A transponder **501** on the towfish **103** will respond with a reply signal upon receipt of the pulse from the transceiver **502.** The time and phase information received by the transceiver **502** are then used to determine the range and bearing of the towfish **103**. This information can then be used to fix the locally determined EM source geometry and orientation in the survey reference frame (e.g., with respect to the surface vessel **101**).

In an alternative configuration (analogous to that shown in FIG. 2), the transceiver may be attached to (or disposed in the vicinity of) the towfish **103**, and the transponder may be disposed below the surface vessel **101**. That is, the **501** on the towfish **103** may comprise a transceiver, while the device **502** attached to the bottom of the surface vessel **101** may comprise a transponder. Note that the description uses "transceivers" and "transponders" as if they are different devices. This is for clarity of illustration only. One of ordinary skill in the art would appreciate that these may be same or similar types of devices (devices that are capable of transmitting and receiving acoustic signals) that are used for different functions.

In the configuration shown in FIG. 5, the transceiver or transponder **501** on the towfish **103** may be the same as that used for the determination of the geometry of the EM source electrodes, i.e., a shared device (transceiver) is used for both determinations.

Having determined the distance and bearing of the towfish **103** relative to the surface vessel **101**, the geometry and orientation of the EM source, as determined in the local reference frame with respect to the USBL on the towfish **103**, can then be correlated with the reference frame with respect to the surface vessel **101**. Furthermore, a global positioning system (GPS) on the surface vessel may be used to fix the location and orientation of the EM source with respect to the global reference (earth) frame.

In addition to the method described above with reference to FIG. 5, other methods may also be used to determine the location and orientation of the EM source electrodes with respect to a global reference frame. The following will describe a few such examples.

In an alternative approach, the acoustic ranging system **502** attached to the vessel may be used to determine the ranges and bearings of three or more of the electrodes of the EM source. These measurements will determine the locations of these three or more electrodes in the global reference frame. Having the locations of these same three or more electrodes in the local reference frame (with respect to the towfish) as well as in the global reference frame, it becomes possible to derive a transformation that can be used to transform any point in the local reference frame into the locations in the global reference frame.

In yet another approach, three or more transponders may be disposed near the surface with their locations defined in the global reference frame. The locations of these three or more transponders are then determined with respect to the local reference frame of the towfish, using the transceiver disposed on the towfish. These determinations will provide locations of the three or more transponders in both the global reference frame and the local reference frame (towfish reference frame). Again, a transformation may be derived from this information and used to convert any point in the local reference frame into locations in the global reference frame.

The last described method may be combined with the first method described with reference to FIG. 5. In the combination approach, fewer than 3 transponders near the surface may be used. For example, if the orientation of the USBL (or SBL) transducer on the towfish is know - e.g., determined with an accelerometer aligned with the transducer axis, then it will be sufficient to measure only two transponders near the surface using the USBL device on the towfish.

When transforming the local coordinates to the global reference frame, it is preferably to apply a shape and size conserving transformation (congruent transformation) such that the high internal accuracy used to describe the source geometry is retained.

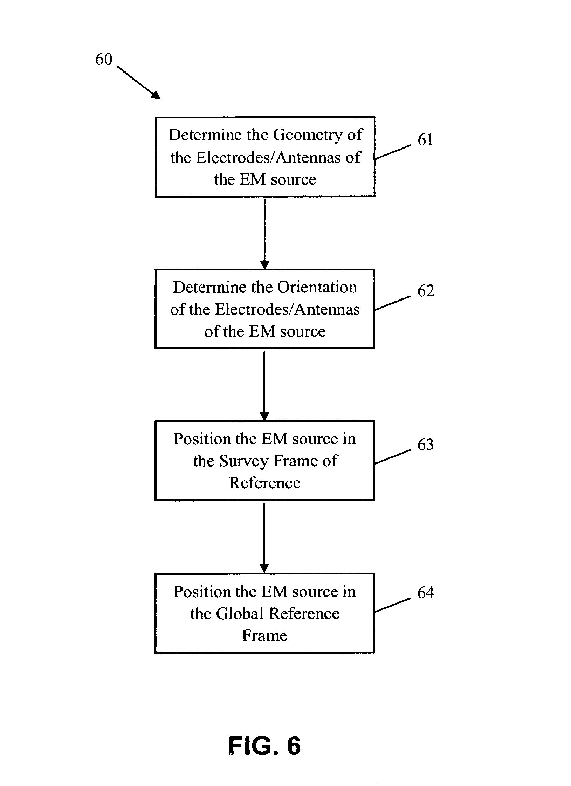

FIG. 6 shows a flow chart illustrating a method for determining the geometry, orientation, and position of an EM source used in a CSEM marine survey. As shown, a method 60 may start with determination of the geometry of the various electrodes of the EM source (step 61). This may be accomplished using any suitable acoustic ranging system described above. Once the geometry of the EM sources (electrodes) are determined, one may determine the attitude (orientation) of the EM source with respect to an outside reference frame (e.g., the gravitational direction) (step 62). Note that the order of steps 61 and 62 may be reversed or these two steps may be performed simultaneously. Then, the locally defined geometry and orientation of the EM source may be correlated with an external frame with reference to the surface vessel (step 63). Finally, the EM source geometry, orientation, and location may be further fixed with respect to the earth frame by using a GPS system (step 64). In fixing (positioning) the EM source to the survey reference frame or the global reference frame, the processing system may apply a shape and size conserving transformation (congruent transformation) such that the accuracy of the geometry measurement of the EM source is preserved.

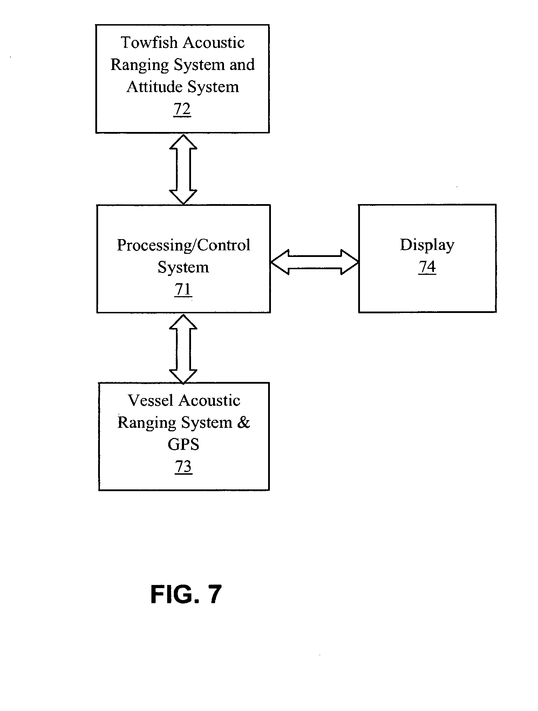

FIG. 7 shows a block diagram of an example positioning system in accordance with one embodiment of the invention. A processing/control system **71** communicates with the acoustic ranging system and attitude system on a towfish **72**. the communication may include control of the operation of the ranging and attitude system, as well as transmission of the results from the towfish to the processing system. The processing/control system **71** similarly controls and communicates with the acoustic ranging system onboard the surface vessel **73**. The processing/control system **71** also performs the transformation of the EM source geometry and orientation from the local reference frame to the global reference frame. The processing/control system **71** also communicates with a display **74**, which may be used for inputting the control parameters and displaying the results. The processing/control system **71** may be onboard the surface vessel. Alternatively, part or all of the processing/control system **71** may be located remotely. One of ordinary skill in the art would also appreciate that the processing/control system **71** may be on a computer system or multiple computer systems.

Advantages of embodiments of the invention may include one or more of the followings. Embodiments of the invention can provide accurate geometry of an EM source such that the survey can produce more accurate results. By having an acoustic ranging system on a towfish, the geometry of the EM source can be determined with high accuracy. These determination may be performed in real time to monitor the survey conditions or to provide data for correcting survey results at a later time. The acoustic ranging system can use various devices that are known in the art, including USBL, SBL, and LBL. The methods and systems of the invention can be used with various types of EM sources, including electrode type and antenna/coil type EM sources.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. An electromagnetic source for electromagnetic survey of a subsea formation, comprising:
a towfish (103) configured to be towed by a surface vessel (101);
a plurality of electrodes (E1,E2,E3,E4) attached to the towfish, wherein the plurality of electrodes are configured to generate at least one electromagnetic field; and
an acoustic ranging system having acoustic components individually attached to corresponding ones of the towfish (103) and the plurality of electrodes (E1,E2,E3,E4), wherein the acoustic ranging system is configured to determine a geometry of the plurality of electrodes, wherein the acoustic component (501) attached to the towfish (103) is a transceiver, and the acoustic components (T1,T2,T3,T4) attached to respective ones of the plurality of electrodes are transponders,
wherein the transceiver (501) is configured to transmit pulses to the transponders (T1,T2,T3,T4) and to a transponder (502) at the surface vessel, and the transceiver (501) is configured to receive reply signals, responsive to the pulses, from the transponders (T1,T2,T3,T4) attached to the electrodes and the transponder (502) at the surface vessel.

2. The electromagnetic source of claim 1, wherein the acoustic ranging system is an ultra short baseline (USBL) system.

3. The electromagnetic source of claim 1, wherein the towfish (103) further comprises an attitude determination system (402).

4. The electromagnetic source of claim 1, wherein the acoustic ranging system is a short baseline (SBL) system.

5. The electromagnetic source of claim 4, wherein the short baseline (SBL) system comprises a plurality of transceivers attached to the towfish (103) and arranged in a configuration for determination of locations of the acoustic components attached to the plurality of electrodes.

6. The electromagnetic source of claim 1, wherein the determined geometry includes relative distances between or among the plurality of electrodes (E1,E2,E3,E4) of the electromagnetic source.

7. The electromagnetic source of claim 1, wherein the reply signal of the transponder at the surface vessel (101) is useable to determine a range between the surface vessel (101) and the towfish (103).

8. A system for electromagnetic survey of a subsea formation, comprising:
a plurality of electromagnetic receivers for positioning on a seafloor; and
an electromagnetic source as defined in any one of claims 1-7.

9. A method for electromagnetic survey of a subsea formation, comprising:
deploying a plurality of electromagnetic receivers on a seafloor;
transmitting an electromagnetic field into the subsea formation using an electromagnetic source towed by a surface vessel (101) at a selected distance above the seafloor, wherein the electromagnetic source comprises:
a towfish (103) configured to be towed by the surface vessel (101);
a plurality of electrodes (E1,E2,E3,E4) attached to the towfish (103); and
an acoustic ranging system having acoustic components individually attached to corresponding ones of the towfish (103) and the plurality of electrodes (E1,E2,E3,E4), wherein the acoustic component (501) attached to the towfish (103) is a transceiver, and the acoustic components (T1,T2,T3,T4) attached to respective ones of the plurality of electrodes (E1,E2,E3,E4) are transponders, wherein the transceiver (501) is configured to transmit pulses to the transponders (T1,T2,T3,T4) and to a transponder (502) at the surface vessel (101), and the transceiver (501) is configured to receive reply signals, responsive to the pulses, from the transponders (T1,T2,T3,T4) attached to the electrodes and the transponder (502) at the surface vessel (101);
detecting electromagnetic signals returned from the subsea formation; and
determining a geometry of the plurality of electrodes (E1,E2,E3,E4) of the electromagnetic source.

10. The method of claim 9, further comprising determining an attitude of the electromagnetic source using an attitude determining system attached to the towfish (103).

11. The method of claim 10, further comprising determining a location and orientation of the electromagnetic source with respect to the surface vessel using the reply signals from the transponder (502) at the surface vessel (101).

12. The method of claim 11, wherein determining the location and orientation of the electromagnetic source is further based on using a global positioning system (OPS).

## Patentansprüche

1. Elektromagnetische Quelle zur elektromagnetischen Erkundung einer Unterseeformation, umfassend:
einen Schleppkabel-Geräteträger (103), der dafür konfiguriert ist, durch ein Überwasserfahrzeug (101) geschleppt zu werden;
eine Vielzahl von Elektroden (E1, E2, E3, E4), die am Schleppkabel-Geräteträger angebracht ist, worin die Vielzahl von Elektroden dafür konfiguriert ist, mindestens ein elektromagnetisches Feld zu erzeugen; und
ein akustisches Entfernungsmessungssystem mit akustischen Komponenten, die einzeln an jeweiligen des Schleppkabel-Geräteträgers (103) und der Vielzahl von Elektroden (E1, E2, E3, E4) angebracht sind, worin das akustische Entfernungsmessungssystem dafür konfiguriert ist, eine Geometrie der Vielzahl von Elektroden zu bestimmen, worin die am Schleppkabel-Geräteträger (103) angebrachte akustische Komponente (501) ein Sendeempfänger ist und die an jeweiligen der Vielzahl von Elektroden angebrachten akustischen Komponenten (T1, T2, T3, T4) Transponder sind,
worin der Sendeempfänger (501) dafür konfiguriert ist, Impulse zu den Transpondern (T1, T2, T3, T4) und zu einem Transponder (502) am Überwasserfahrzeug zu übertragen, und der Sendeempfänger (501) dafür konfiguriert ist, Antwortsignale als Antwort auf die Impulse von den an den Elektroden angebrachten Transpondern (T1, T2, T3, T4) und vom Transponder (502) am Überwasserfahrzeug zu empfangen.

2. Elektromagnetische Quelle nach Anspruch 1, worin das akustische Entfernungsmessungssystem ein System mit ultrakurzer Basislinie (USBL) ist.

3. Elektromagnetische Quelle nach Anspruch 1, worin der Schleppkabel-Geräteträger (103) ferner ein Stellungsbestimmungssystem (402) umfasst.

4. Elektromagnetische Quelle nach Anspruch 1, worin das akustische Entfernungsmessungssystem ein System mit kurzer Basislinie (SBL) ist.

5. Elektromagnetische Quelle nach Anspruch 4, worin das System mit kurzer Basislinie (SBL) eine Vielzahl von Sendeempfängern umfasst, die am Schleppkabel-Geräteträger (103) angebracht ist und in einer Konfiguration zur Bestimmung von Orten der akustischen Komponenten, die an der Vielzahl von Elektroden angebracht sind, angeordnet ist.

6. Elektromagnetische Quelle nach Anspruch 1, worin die bestimmte Geometrie relative Abstände zwischen oder unter der Vielzahl von Elektroden (E1, E2, E3, E4) der elektromagnetischen Quelle einschließt.

7. Elektromagnetische Quelle nach Anspruch 1, worin das Antwortsignal des Transponders am Überwasserfahrzeug (101) verwendbar ist, um eine Entfernung zwischen dem Überwasserfahrzeug (101) und dem Schleppkabel-Geräteträger (103) zu bestimmen.

8. System zur elektromagnetischen Erkundung einer Unterseeformation, umfassend:
eine Vielzahl von elektromagnetischen Empfängern zur Positionierung auf einem Meeresboden; und
eine elektromagnetische Quelle wie in einem der Ansprüche 1 bis 7 definiert.

9. Verfahren zur elektromagnetischen Erkundung einer Unterseeformation, umfassend:
Absetzen einer Vielzahl von elektromagnetischen Empfängern auf einem Meeresboden;
Übertragen eines elektromagnetischen Feldes in die Unterseeformation unter Verwendung einer elektromagnetischen Quelle, die durch ein Überwasserfahrzeug (101) in einem ausgewählten Abstand oberhalb des Meeresbodens geschleppt wird, worin die elektromagnetische Quelle umfasst:
einen Schleppkabel-Geräteträger (103), der dafür konfiguriert ist, durch das Überwasserfahrzeug (101) geschleppt zu werden;
eine Vielzahl von Elektroden (E1, E2, E3, E4), die am Schleppkabel-Geräteträger angebracht ist; und
ein akustisches Entfernungsmessungssystem mit akustischen Komponenten, die einzeln an jeweiligen des Schleppkabel-Geräteträgers (103) und der Vielzahl von Elektroden (E1, E2, E3, E4) angebracht sind, worin die am Schleppkabel-Geräteträger (103) angebrachte akustische Komponente (501) ein Sendeempfänger ist und die an jeweiligen der Vielzahl von Elektroden (E1, E2, E3, E4) angebrachten akustischen Komponenten (T1 T2, T3, T4) Transponder sind, worin der Sendeempfänger (501) dafür konfiguriert ist, Impulse zu den Transpondern (T1 T2, T3, T4) und zu einem Transponder (502) am Überwasserfahrzeug (101) zu übertragen, und der Sendeempfänger (501) dafür konfiguriert ist, Antwortsignale als Antwort auf die Impulse von den an den Elektroden angebrachten Transpondern (T1 T2, T3, T4) und vom Transponder (502) am Überwasserfahrzeug (101) zu empfangen;
Ermitteln elektromagnetischer Signale, die von der Unterseeformation zurückgeworfen wurden; und
Bestimmen einer Geometrie der Vielzahl von Elektroden (E1, E2, E3, E4) der elektromagnetischen Quelle.

10. Verfahren nach Anspruch 9, ferner umfassend: Bestimmen einer Stellung der elektromagnetischen Quelle unter Verwendung eines Stellungsbestimmungssystems, das am Schleppkabel-Geräteträger (103) angebracht ist.

11. Verfahren nach Anspruch 10, ferner umfassend: Bestimmen eines Orts und einer Ausrichtung der elektromagnetischen Quelle in Bezug auf das Überwasserfahrzeug unter Verwendung des Antwortsignals vom Transponder (502) am Überwasserfahrzeug (101).

12. Verfahren nach Anspruch 11, worin das Bestimmen des Orts und der Ausrichtung der elektromagnetischen Quelle ferner auf der Verwendung eines Globalen Positionsbestimmungssystems (GPS) beruht.

## Revendications

1. Source électromagnétique pour une étude électromagnétique d'une formation sous-marine, comprenant :
un poisson remorqué (103) configuré pour être remorqué par un navire de surface (101) ;
une pluralité d'électrodes (E1, E2, E3, E4) fixées au poisson remorqué, la pluralité d'électrodes étant configurées pour générer au moins un champ électromagnétique ; et
un système acoustique de mesure de distance présentant des composants acoustiques fixés individuellement à des éléments correspondants parmi le poisson remorqué (103) et la pluralité d'électrodes (E1, E2, E3, E4), le système acoustique de mesure de distance étant configuré pour déterminer une géométrie de la pluralité d'électrodes, le composant acoustique (501) fixé au poisson remorqué (103) étant un émetteur/récepteur, et les composants acoustiques (T1, T2, T3, T4) fixés à des électrodes respectives parmi la pluralité d'électrodes étant des transpondeurs,
dans laquelle l'émetteur/récepteur (501) est configuré pour émettre des impulsions vers les transpondeurs (T1, T2, T3, T4) et vers un transpondeur (502) situé au niveau du navire de surface, et l'émetteur/récepteur (501) est configuré pour recevoir des signaux de réponse, en réaction aux impulsions, en provenance des transpondeurs (T1, T2, T3, T4) fixés aux électrodes et du transpondeur (502) situé au niveau du navire de surface.

2. Source électromagnétique selon la revendication 1, dans laquelle le système acoustique de mesure de distance est un système à base ultracourte (USBL).

3. Source électromagnétique selon la revendication 1, dans laquelle le poisson remorqué (103) comprend en outre un système de détermination d'assiette (402).

4. Source électromagnétique selon la revendication 1, dans laquelle le système acoustique de mesure de distance est un système à base courte (SBL).

5. Source électromagnétique selon la revendication 4, dans laquelle le système à base courte (SBL) comprend une pluralité d'émetteurs/récepteurs fixés au poisson remorqué (103) et agencés en une configuration permuttant une détermination des emplacements des composants acoustiques fixés à la pluralité d'électrodes.

6. Source électromagnétique selon la revendication 1, dans laquelle la géométrie déterminée comprend des distances relatives entre ou au sein de la pluralité d'électrodes (E1, E2, E3, E4) de la source électromagnétique.

7. Source électromagnétique selon la revendication 1, dans laquelle le signal de réponse du transpondeur situé au niveau du navire de surface (101) peut être utilisé pour déterminer une distance entre le navire de surface (101) et le poisson remorqué (103).

8. Système pour une étude électromagnétique d'une formation sous-marine, comprenant :
une pluralité de récepteurs électromagnétiques permettant un positionnement sur un fond marin ; et
une source électromagnétique selon l'une quelconque des revendications 1 à 7.

9. Procédé pour une étude électromagnétique d'une formation sous-marine, comprenant les étapes consistant à :
déployer une pluralité de récepteurs électromagnétiques sur un fond marin ;
émettre un champ électromagnétique dans la formation sous-marine en utilisant une source électromagnétique remorquée par un navire de surface (101) à une distance sélectionnée au-dessus du fond marin,
dans lequel la source électromagnétique comprend :
un poisson remorqué (103) configuré pour être remorqué par le navire de surface (101) ;
une pluralité d'électrodes (E1, E2, E3, E4) fixées au poisson remorqué (103), et
un système acoustique de mesure de distance présentant des composants acoustiques fixés de manière individuelle à des éléments correspondants parmi le poisson remorqué (103) et la pluralité d'électrodes (E1, E2, E3, E4), le composant acoustique (501) fixé au poisson remorqué (103) étant un émetteur/récepteur, et les composants acoustiques (T1, T2, T3, T4) fixés à des électrodes respectives parmi la pluralité d'électrodes (E1, E2, E3, E4) étant des transpondeurs, l'émetteur/récepteur (501) étant configuré pour émettre des impulsions vers les transpondeurs (T1, T2, T3, T4) et vers un transpondeur (502) situé au niveau du navire de surface (101), et l'émetteur/récepteur (501) étant configuré pour recevoir des signaux de réponse, en réaction aux impulsions, en provenance des transpondeurs (T1, T2, T3, T4) fixés aux électrodes et du transpondeur (502) situé au niveau du navire de surface (101) ;
détecter des signaux électromagnétiques renvoyés par la formation sous-marine ; et
déterminer une géométrie de la pluralité d'électrodes (E1, E2, E3, E4) de la source électromagnétique.

10. Procédé selon la revendication 9, comprenant en outre une étape consistant à déterminer une assiette de la source électromagnétique en utilisant un système de détermination d'assiette fixé au poisson remorqué (103).

11. Procédé selon la revendication 10, comprenant en outre une étape consistant à déterminer un emplacement et une orientation de la source électromagnétique par rapport au navire de surface en utilisant le signal de réponse en provenance du transpondeur (502) situé au niveau du navire de surface (101).

12. Procédé selon la revendication 11, dans lequel l'étape de détermination de l'emplacement et de l'orientation de la source électromagnétique est en outre basée sur une utilisation d'un système de positionnement global (GPS).
